# EUROPÄISCHE PATENTANMELDUNG

(11) **EP 0 886 074 A1**
(43) Veröffentlichungstag der Anmeldung: **23.12.1998**
(21) Anmeldenummer: 98110900.2
(22) Anmeldetag: 15.06.1998
(51) Int. Cl.: F16B 21/20

(54) **Befestigungsklammer**

(30) Priorität: 19.06.1997 DE 19726041
(71) Anmelder: Springfix Befestigungstechnik GmbH, 73084 Salach (DE)
(72) Erfinder: Wandelt, Klaus, 38554 Weyhausen (DE); Ecker, Rainer, 73033 Göppingen (DE); Gundl, Felix, 73084 Salach (DE)
(74) Vertreter: Bardehle, Heinz, Dipl.-Ing.

(57) **Zusammenfassung**

Die Erfindung betrifft eine Befestigungsklammer zum Befestigen von plattenförmigen Bauteilen mittels eines stabförmigen Elements, wie Bolzen, Schrauben oder dergleichen und der Befestigungsklammer. Dazu weist die Befestigungsklammer auf die Mitte zulaufende Federzungen (3) zum Einklemmen des stabförmigen Elementes (2) auf. Die Befestigungsklammer (1) ist tellerartig ausgebildet und weist einen Tellerboden und einen segmentierten Tellerrand (5) auf. Im entlasteten Zustand bildet der äußere Tellerrand einen geschlossenen Außenring (6), der im Klammerzustand sich radial nach außen segmentweise spreizt. Der Tellerboden (4) besitzt mindestens drei zur Tellermitte gerichtete Federzungen (3), die beim Festklemmen des stabförmigen Elementes einseitig verbogen sind.

## Beschreibung

Die Erfindung betrifft eine Befestigungsklammer zum Befestigen von plattenförmigen Bauteilen mittels eines stabförmigen Elements, wie Bolzen, Schrauben oder dergleichen und der Befestigungsklammer, wobei die Befestigungsklammer auf die Mitte zulaufende Federzungen zum Einklemmen des stabförmigen Elementes aufweist.

Eine derartige Befestigungsklammer ist aus DE 26 48 467 bekannt und hat den Nachteil einer großen Bautiefe, da sie mit ihrem U-förmigen Körper tief in den Raum hinter dem feststehenden plattenförmigen Teil hineinragt. Darüber hinaus hat diese Befestigungsklammer den Nachteil, daß der plattenförmige Teil eine an die Form der Befestigungsklammer genau angepaßte Öffnung aufweisen muß und eine Öffnungsgröße, die dem Bolzendurchmesser angepaßt ist, nicht ausreicht. Schließlich ist die Befestigungsklammer wegen ihrer sperrigen Form nicht für automatische Zubringer aus einem Vorratsbehälter mit einem Vorrat einer Vielzahl derartiger Befestigungsklammern geeignet. Derartige Probleme stellen sich insbesondere bei der vollautomatischen Montage von Kraftfahrzeugen und anderen technischen Massengütern, wie Fernseher, Rundfunkempfänger und Haushaltsgeräten.

Aufgabe der Erfindung ist es, eine Befestigungsklammer anzugeben, die die Nachteile im Stand der Technik überwindet und federnd andrückbar die zu befestigenden Teile mit Hilfe eines stabförmigen Elementes die zu befestigenden Teile miteinander mit definierter Kraft verspannt, sowie insbesondere ein Verhaken mehrerer Klammern untereinander in einem Vorratsbehälter vermeidet, die ineinander auf kleinstem Raum stapelbar sind und relativ einfach einem Arbeitungsautomaten zuführbar oder einem gestapelten Vorrat entnehmbar sind.

Diese Aufgabe wird mit dem Gegenstand gelöst, dessen Merkmale in Anspruch 1 wiedergegeben sind.

Durch die grundsätzliche tellerartige Gestaltung der Befestigungsklammer wird vorteilhaft eine hohe Stapeldichte erreicht, so daß Vorratsmengen in Rollenform möglich werden, wie Sie beim Sortieren und Bevorraten von Münzen üblich sind.

Ein im entlasteten Zustand nahezu geschlossener Außenring, der von einem segmentierten Tellerrand gebildet wird, verhindert ein Verhaken der Befestigungsklammern untereinander. Dieser Außenring hat ferner den Vorteil, daß er beim Stapeln von vielen Befestigungsklammern einen Mindestabstand zwischen den Befestigungsklammern aufrecht erhält, so daß ein Verkleben der Klammern während beispielsweise einem Aufbringen von Schutzschichten verhindert wird.

Mindestens drei zur Tellermitte hin am Tellerboden befindliche Federzungen zentrieren das festzuklemmende stabförmige Element, wenn es an den Federzungen vorbei durch die Mitte des Tellerbodens gesteckt wird und sorgen dafür, daß das stabförmige Element, falls es mit einem Gewinde ausgestattet ist, problemlos aus der Befestigungsklammer wieder herausgedreht werden kann. Um die Befestigungsklammer von einem glatten Bolzen abzuschrauben, sind in einer bevorzugten Ausführungsform der Erfindung die Federzungen zumindest an ihren Spitzen verschränkt, so daß sie sich beim Drehen der Befestigungsklammer eigene Gewindegänge in den glatten Bolzen ritzen. Beim Zusammenbau kann die Befestigungsklammer unabhängig davon, ob das stabförmige Element ein Gewinde aufweist, vorteilhaft durch seine Federzungen im Tellerboden auf das stabförmige Element aufgeschoben oder aufgetrieben werden, was die Montagezeiten vorteilhaft verkürzt. Die Steifheit und Härte der Federzungen kann den Klemmerfordernissen angepaßt werden. Auch die Form der Federzungen ist je nach Anforderung variierbar.

Zum Klammern glatter Stäbe wird vorzugsweise die Steifigkeit und Härte der Federzungen erhöht und die Spitze der Federzungen scharfkantig ausgebildet, damit sie sich in den Schaft des stabförmigen Elementes eingraben kann. die Härte der Federzungenspitze wird in diesem Fall größer als die Härte des Schaftes der stabförmigen Elementes gewählt.

Bei stabförmigen Elementen mit Gewindeschaft kommt es darauf an, daß das Gewinde nicht beschädigt wird, damit eine lösbare und dennoch einsteck- oder einschlagbare Verbindung herstellbar ist. Deshalb wird die Zungenspitze vorzugsweise abgerundet und kann auch dem Gewindedurchmesser durch konvexe Ausbildung der Federzungenspitzen und der Gewindesteigung durch Verschränken der Federzungen angepaßt werden. Eine derartige Verschränkung der Federzungen zumindest an ihren Spitzen hat darüberhinaus den Vorteil, daß die Befestigungsklammer selbst von glatten Bolzen abschraubbar ist.

In allen Fällen dient ein einseitiges Vorbiegen der Federzungen in Einsteck- oder Einschlagrichtung dem erleichterten Einführen des stabförmigen Elementes und dem erhöhten Widerstand der Befestigungsklammer gegen Herausziehen des stabförmigen Elementes.

Bei einer bevorzugten Ausführungsform der Befestigungsklammer weist der segmentierte Tellerrand mindestens 5 Segmente auf, die sich bei Belastung spreizen und eine Druckkraft auf zum Beispiel zwei plattenförmige Teile ausüben, die mittels der Befestigungsklammer und einem stabförmigen Element mit Kopf aufeinander gedrückt werden. In den zu verbindenden Teilen sind vorteilhafterweise lediglich Durchgangslöcher vorzusehen, die dem Schaft des stabförmigen Elementes angepaßt sind. Das stabförmige Element kann auch ein integraler Teil eines der zu verbindenden Teile sein. Dies ist insbesondere der Fall beim Festklammern von Ziernoppen, knopfartigen Verzierungen oder Zierleisten auf dünnwandigen Blech-, Leder-, Tuch- oder Kunststoffteilen, die nur von einer Seite her zugänglich sind.

Die Segmente des Tellerrandes weisen vorzugsweise Aussparungen auf, die so gestaltet sind, daß die Druckkraft des Segmentes auf die zu verbindenden Teile mit Aussparung optimal an die Materialeigenschaften der zu verbinden Teile und die Belastbarkeit der Verbindung angepaßt ist. Dazu ist jede Aussparung vieleckig, vorzugsweise trapezförmig oder dreieckig ausgebildet, und eine vieleckige, vorzugsweise trapezförmige oder dreieckige Abdeckzunge deckt annähernd die innere Fläche der Aussparung ab. Die Abdeckzunge hat den Vorteil, daß ein Verhaken oder Verklemmen oder Befestigungsklammern untereinander in einem Vorratsbehälter der Vorratsstapel verhindert wird. Um darüberhinaus vorteilhaft zu verhindern, daß die Abdeckzungen die Steifheit der sich spreizenden Segmente des Tellerrandes vergrößern, sind die Abdeckzungen derart an das Tellerrandsegment angeflanscht, daß die eine Anflanschkante einer jeden Abdeckzunge tangential zu einer Umfangslinie innerhalb des Tellerrandes ausgerichtet ist.

Der segmentierte Tellerrand weist vorzugsweise Langlöcher auf, die sich radial innerhalb des Außenringes bis zum Tellerboden erstrecken und auf dieser Länge einen Abstand zwischen den Segmenten bilden, so daß lediglich der Außenring des Tellerrandes im unbelasteten Zustand geschlossen ist und die Segmente des Tellerrandes deutlich voneinander getrennt sind.

Der Tellerboden besteht vorzugsweise aus einem radial äußeren geschlossenen Ringelement, an dem radial nach innen die Federzungen befestigt sind und radial nach außen der segmentierte Tellerrand angeordnet ist. Dabei bilden die Federzungen zwischen ihren Spitzen eine zentrale Durchgangsöffnung aus, die kleiner als der Durchmesser des stabförmigen Elementes ist. Beim Durchstecken des stabförmigen Elementes werden die Federzungen in Durchsteckrichtung nach außen gebogen und arretieren dadurch vorteilhaft das stabförmige Element entgegen der Einsteckrichtung. Das Arretieren des stabförmigen Elementes kann durch Rändelmuster, Umfangsriefen, sägezahnförmige Einkerbungen oder Gewindegänge auf dem Schaft des stabförmigen Elementes vergrößert werden. Gewindegänge haben den Vorteil, daß sich das stabförmige Element wieder herausdrehen läßt. Fehlen auf dem stabförmigen Element die Gewindegänge, so kann die Befestigungsklammer durch an ihren Spitzen verschränkte Federzungen abgeschraubt werden.

Das geschlossene Ringelement hält bei der erfindungsgemäßen Befestigungsklammer sowohl die Federzungen radial nach innen in Position als auch die Tellerrandsegmente radial nach außen zusammen.

In einer bevorzugten Weiterbildung der Erfindung weist das Ringelement an seinem radial inneren Umfang einen mehrkantigen Kragen zum Ansetzen eines Werkzeugs auf, so daß auf die Befestigungsklammer ein Drehmoment ausgeübt werden kann. Dabei sind die Federzungen radial innerhalb des Kragens angeordnet. Der Kragen ist so ausgebildet, daß vorzugsweise ein Ring- oder Maulschlüssel ein Drehmoment auf die Befestigungsklammer ausüben kann. Er ist insbesondere in solchen Fällen von Vorteil, wenn das stabförmige Element Gewindegänge aufweist, so daß beim Herausdrehen oder Lösen des Stapelelementes die Befestigungsklammer mit dem Werkzeug in Position gehalten werden kann, ohne daß der gespreizte Tellerrand das zu befestigende Teil durch Drehen beschädigt. Der Kragen kann auch konisch ausgebildet sein, so daß er für mehrere Werkzeuggrößen geeignet ist. Die konische Ausbildung des Kragens hat darüberhinaus den Vorteil, daß die Befestigungsklammern dichter stapelbar sind, weil die konischen Kragen ineinander gestapelt werden können, ohne daß sich mehrere Befestigungsklammern untereinander verhaken, wobei ein Mindestabstand zwischen den Klammern durch den entsprechend vorgeformten Außenring eingehalten wird, der deshalb vorzugsweise umgebördelt ist.

Vorzugsweise ist der Kragen als Sechskant ausgebildet und weist sechs Federzungen auf, so daß auf jeder der sechs Seiten eine radial nach innen ragende Federzunge angeordnet ist. Diese sechs Federzungen bewirken eine verbesserte zentrale Führung und Einklemmung des stabförmigen Elementes.

In einer bevorzugten Ausbildung wird die Befestigungsklammer aus einem Federstahlblech hergestellt, das in einem vorbereitenden Arbeitsgang aus einer ungehärteten Federstahlplatte oder einem Federstahlband ausgestanzt wird, wobei gleichzeitig oder in unmittelbarem Anschluß alle Aussparungen und Zungen ausgestanzt werden, während anschließend der geschlossene Außenrand umgebördelt wird und Trennschlitze für eine Segmentierung des Außenrandes eingebracht werden. Anschließend wird die Federstahlplatte mittels Tiefziehen oder Formpressen in der Tellerform hergestellt.

Mit diesem Verfahren wird vorteilhaft eine einstückige Befestigungsklammer mit einem breiten Anwendungsspektrum hergestellt.

Für niedrige Klemmkräfte kann die Befestigungsklammer aus Kunststoff hergestellt sein. In diesem Fall wird die Befestigungsklammer vorzugsweise mittels Spritzguß hergestellt. Für höhere Belastungen der Verbindung ist die Befestigungsklammer aus Federstahl und das stabförmige Element aus Kunststoff hergestellt und für höchste Belastungen sind die Befestigungsklammer und das stabförmige Element aus Metall, wobei vorzugsweise das stabförmige Element aus einem weicheren Metall, z.B. nicht ausgehärteten Stahl, als die Befestigungsklammer ist und das Befestigungselement aus gehärtetem Federstahl gefertigt ist.

Die nachfolgende Zeichnung soll die Erfindung anhand von bevorzugten Ausführungsformen erläutern.
- **Fig. 1**: zeigt eine Ausführungsform der Erfindung in Draufsicht,
- **Fig. 2**: zeigt die Ausführungsform im Querschnitt entlang der Schnittfläche AA der Fig. 1,
- **Fig. 3**: zeigt eine Ausführungsform der Erfindung in Draufsicht,
- **Fig. 4**: zeigt die Ausführungsform im Querschnitt entlang der Schnittfläche AA der Fig. 3.

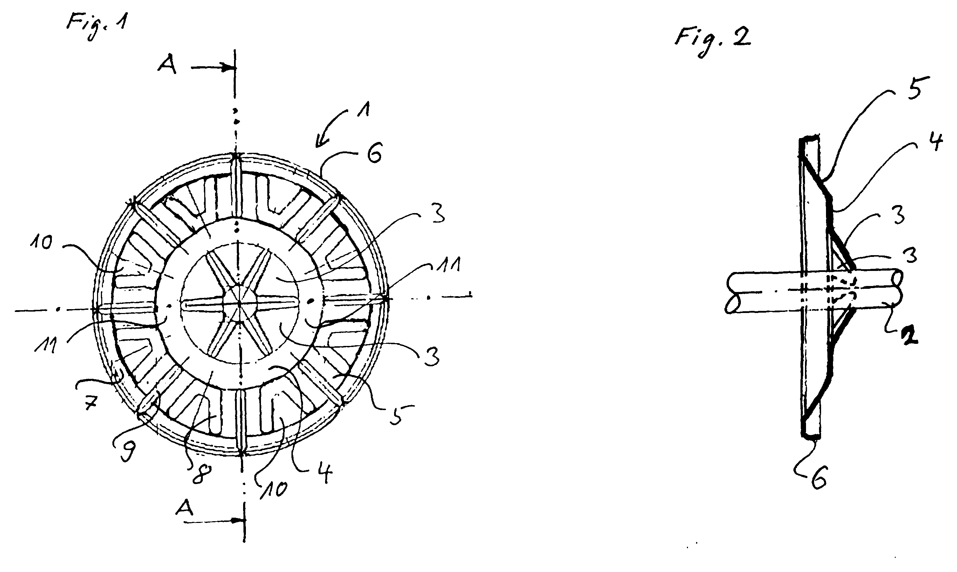

Fig. 1 zeigt eine Ausführungsform der Erfindung in Draufsicht. Eine Befestigungsklammer 1 weist zum Befestigen von nicht gezeigten plattenförmigen Bauteilen mittels eines stabförmigen Elements 2, wie Bolzen, Schrauben oder dergleichen und der Befestigungsklammer 1 auf die Mitte 20 zulaufende Federzungen 3 zum Einklemmen des stabförmigen Elementes 2 auf. Dazu ist die Befestigungsklammer 1 tellerförmig ausgebildet, wie es in Fig. 2 gezeigt wird. Der Außenrand des Tellers ist zu einem Außenring 6 umgebördelt, während der Tellerrand 5 des Tellers selbst in Einsteckrichtung des stabförmigen Elements 2, die durch den Pfeil C in Fig. 2 gezeigt wird, ausgewölbt ist. Der Tellerrand 5 ist segmentiert und weist in diesem Ausführungsbeispiel acht Tellerrandsegmente 21 bis 28 auf.

Das stabförmige Element 2 wird in Fig. 2 nur teilweise mit seinem Schaft gezeigt, der in diesem Ausführungsbeispiel eine glatte Oberfläche aufweist und aus einem weicheren Material als die Befestigungsklammer 1 besteht, so daß sich die Federzungen 3 mit ihren Spitzen in die Staboberfläche beim Einstecken des stabförmigen Elementes 2 eingraben können. Die Anzahl der Federzungen 3 ist in diesem Ausführungsbeispiel sechs, die an einem Ringelement 11 des Tellerbodens 4 befestigt sind und mit ihren Spitzen radial auf die Mitte 20 der Befestigungsklammer zeigen. In der abgebildeten einstückigen Bauweise der Befestigungsklammer 1 geht das Ringelement 11 unmittelbar ohne Verbindungsnaht in die Federzungen 3 über. Ringelement 11 und Federzungen 3 entstehen unmittelbar beim Ausstanzen des Tellerbodens 4.

Wie Fig. 1 deutlich zeigt, ist der Außenring 6 segmentiert und spreizt sich, sobald eine Kraft auf das Ringelement 11 des Tellerbodens 4 und auf den Außenrand des Tellerrands 5 in Pfeilrichtung B, wie Fig. 2 zeigt, ausgeübt wird. Der sich spreizende Außenring 6 liegt dabei auf einem der nicht gezeigten zusammenzuklammernden Teile auf. Die Federwirkung des segmentierten Tellerrandes wird durch die Größe von Aussparungen 8 in jedem Tellerrandsegment 21 bis 28 bestimmt. In diesem Ausführungsbeispiel sind die Aussparungen 8 trapezförmig ausgebildet und mit trapezförmigen Abdeckzungen 10 teilweise wieder abgedeckt, um ein Verhaken mehrerer Befestigungsklammern untereinander zu vermeiden. Auch der im unbelasteten Zustand nahezu geschlossene Außenring dient neben der Versteifung des Außenrandes des Tellerrades 5 diesem Zweck. Die Breite des federnden Materials, das nach dem Ausstanzen der Aussparungen in jedem Segment zur Verfügung steht und damit neben der Dicke die Federkennlinie des segmentierten Tellerrandes 5 bestimmt, kann durch zusätzliche Langlöcher 9 eingestellt werden. Diese Langlöcher 9 befinden sich entlang der radialen Segmentierungslinien 30 und erstrecken sich in diesem Ausführungsbeispiel radial vom äußeren Rand des Ringelementes 11 im Tellerboden 4 nach außen bis zu dem segmentierten Außenring 6.

Die Federzungen 3, die in den Darstellungen der Fig. 1 und 2 im ausgewölbten Zustand nach Einstecken des stabförmigen Elementes 2 gezeigt werden, können im unbelasteten Zustand ebenmäßig mit dem Ringelement 11 sein oder bereits in Einsteckrichtung C vorgebogen sein, um das zentrale Aufstecken, Aufschieben oder Aufschlagen der Befestigungsklammer auf das stabförmige Element 2 zu erleichtern.

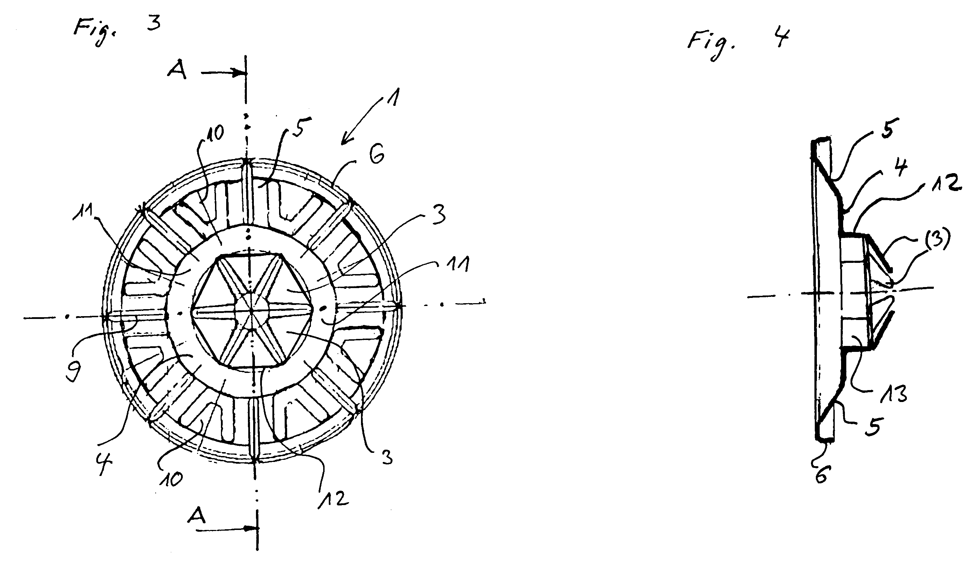

Fig. 3 zeigt eine weitere Ausführungsform der Erfindung in Draufsicht, und Fig. 4 zeigt diese Ausführungsform im Querschnitt. Während die Gestaltung des Tellerrandes 5 in dieser Ausführungsform unverändert beibehalten wird, wird der Tellerboden 4 vorteilhaft umgestaltet. Er weist am Innenrand des Ringelements 11 einen mehrkantigen Kragen 12, der sich in Einsteckrichtungdes stabförmigen Elements erstreckt, zum Ansetzen eines Werkzeugs auf, so daß auf die Befestigungsklammer ein Drehmoment ausgeübt werden kann. Die Federzungen 3 sind hier radial innerhalb des Kragens 12 angeordnet. Der Kragen 12 ist zum Ansetzen eines Maul- oder Ringschlüssels als Sechskant ausgebildet, so daß es sich anbietet auch sechs Federzungen vorzusehen, die sich radial nach innen von den sechs Seiten des sechseckigen Kragens 12 aus erstrecken.

In diesem bevorzugten Ausführungsbeispiel ist die Befestigungsklammer 1 aus Federstahl einstückig hergestellt. Dazu wird die Grundstruktur in ihrem Umriß aus einer ungehärteten Federstahlplatte oder Federstahlband und gleichzeitig oder danach eine Feinstruktur ausgestanzt. Anschließend wird die Tellerform mit umgebördeltem Außenring 6 geformt. Abschließend wird die Befestigungsklammer ausgehärtet und falls erforderlich mit einem Oberflächenschutz versehen, wobei der umgebördelte Außenring 6 als Distanzhalter gegen Verkleben beim Aufbringen von Schutzschichten dient.

## Patentansprüche

1. Befestigungsklammer zum Befestigen von plattenförmigen Bauteilen mittels eines stabförmigen Elements, wie Bolzen, Schrauben oder dergleichen und der Befestigungsklammer, wobei die Befestigungsklammer auf die Mitte zulaufende Federzungen zum Einklemmen des stabförmigen Elementes aufweist,
**dadurch gekennzeichnet**, **daß**
die Befestigungsklammer (1) tellerartig ausgebildet ist,
einen Tellerboden (4) und einen segmentierten Tellerrand (5) aufweist und im entlasteten Zustand einen geschlossenen Außenring (6) aufweist, der im Klammerzustand sich radial nach außen segmentweise spreizt, und der Tellerboden (4) mindestens drei zur Tellermitte gerichtete Federzungen (3) aufweist, die nach Festklemmen des stabförmigen Elementes (2) einseitig verbogen sind.

2. Befestigungsklammer nach Anspruch 1, dadurch gekennzeichnet, daß der segmentierte Tellerrand (5) Segmente (7) mit Aussparungen (8) aufweist.

3. Befestigungsklammer nach Anspruch 2, dadurch gekennzeichnet, daß jede Aussparung (8) vieleckig, vorzugsweise trapezförmig oder dreieckig ausgebildet ist und eine vieleckige, vorzugsweise trapezförmige oder dreieckige Abdeckzunge (10) die annähernd die innere Fläche der Aussparung (8) abdeckt aufweist.

4. Befestigungsklammer nach einem der Ansprüche 1 bis 3, dadurch gekennzeichnet, daß der segmentierte Tellerrand (5) mittels Langlöchern (9), die sich radial innerhalb des Außenringes (6) bis zum Tellerboden (4) erstrecken, beabstandete Segmente (7) aufweist.

5. Befestigungsklammer nach einem der Ansprüche 1 bis 4, dadurch gekennzeichnet, daß der Tellerboden (4) ein radial äußeres geschlossenen Ringelement (11) aufweist, an dem radial nach innen die Federzungen (3) befestigt sind und radial nach außen der segmentierte Tellerrand (5) befestigt ist.

6. Befestigungsklammer nach Anspruch 5, dadurch gekennzeichnet, daß das Ringelement (11) an seinem radial inneren Umfang einen mehrkantigen Kragen (12) zum Ansetzen eines Werkzeugs zum Drehen der Befestigungsklammer (1) aufweist und die Federzungen (3) radial innerhalb des Kragens (12) angeordnet sind.

7. Befestigungsklammer nach Anspruch 5 oder 6, dadurch gekennzeichnet, daß der Kragen (12) als Sechskant ausgebildet ist und sechs Federzungen (3) aufweist.

8. Befestigungsklammer nach einem der Ansprüche 1 bis 7, dadurch gekennzeichnet, daß die Federzungen an ihren Spitzen verschränkt und dem Durchmesser des stabförmigen Elementes 2 angepaßt sind.

9. Befestigungsklammer nach einem der Ansprüche 1 bis 7, dadurch gekennzeichnet, daß die Befestigungsklammer (1) aus Federstahl hergestellt ist.

10. Befestigungsklammer nach einem der Ansprüche 1 bis 9, dadurch gekennzeichnet, daß die Befestigungsklammer (1) aus Kunststoff hergestellt ist.

11. Befestigungsklammer nach einem der Ansprüche 1 bis 10, dadurch gekennzeichnet, daß die Befestigungsklammer (1) einstückig ist.

12. Befestigungsklammer nach einem der Ansprüche 1 bis 11, dadurch gekennzeichnet, daß die Befestigungsklammer (1) aus einer Platte oder einem Band gestanzt und formgepreßt ist.

13. Befestigungsklammer nach einem der Ansprüche 1 bis 11, dadurch gekennzeichnet, daß die Befestigungsklammer (1) spritzgußgeformt ist.
